# EUROPEAN PATENT SPECIFICATION

(11) **EP 3 375 719 B1**
(45) Date of publication and mention of the grant of the patent: **29.04.2020**
(21) Application number: 18162116.0
(22) Date of filing: 15.03.2018
(51) Int. Cl.: B65B 29/02, B65B 35/50, B65B 35/54, B65B 35/56, B65B 35/58, B65G 57/081

(54) **MACHINE FOR ARRANGING OBJECTS**
MASCHINE ZUM ORDNEN VON GEGENSTÄNDEN
MACHINE POUR ARRANGER DES OBJECTS

(30) Priority: 17.03.2017 IT 201700030083
(43) Date of publication of application: 19.09.2018
(73) Proprietor: ICA S.p.A., 40138 Bologna (IT)
(72) Inventor: Rapparini, Ulisse, 40138 Bologna (IT)
(74) Representative: Grünecker Patent- und Rechtsanwälte PartG mbB

(56) References cited:
- EP-A1- 3 002 224
- US-A- 3 143 223
- US-A- 3 253 694
- US-A- 4 002 005
- US-A- 4 771 589

## Description

### TECHNICAL FIELD

The present invention refers to the technological field of the arrangement of objects, comprising a first end and a projecting edge arranged in proximity to said end, in an alternate manner inside packets or cases. For example, such objects can be capsules for obtaining infusions. In particular, the present invention refers to a machine and a method for arranging such objects.

### BACKGROUND

Arranging objects having a projecting edge in proximity to an end of such an object in an alternate manner inside a case and/or package is particularly useful so as to reduce the space occupied by the objects themselves, so as to be able to pack them in packages that occupy the least possible space. Such objects can be represented, for example, by capsules for preparing beverages like coffee or similar.

Concerning this, different devices for arranging such objects in an alternate manner are known in the state of the art. The devices commonly used, however, have various drawbacks. Often, indeed, the devices normally used are complicated and expensive to make, many times they are also very bulky. Indeed, they foresee the use of structures, like for example rails for transporting objects, which are very long and follow articulated paths.

The machine described in patent application EP 3 002 224 A1 is also known. Such a machine is very effective in orienting the objects in an alternate manner, however it refers to objects coming from two distinct rows. Another limitation is given by the fact that it requires two movement systems that rotate the objects so as to be able to alternate them.

The purpose of the present invention is indeed to provide a machine that is compact and occupies little space and that therefore provides for short and simple paths for the objects to be arranged. Indeed, another purpose of the present invention is to make a machine the manufacturing costs of which are much lower with respect to the manufacturing costs of the machines commonly used in the state of the art. Another purpose of the present invention is to provide a method for arranging such objects that is simple and effective. Prior art documents US 4 002 005 A and US 3 253 694 A disclose a machine for arranging object according to the preamble of claim 1. Furthermore prior art documents US 4 771 589 A, EP 3 002 224 A1 and US 3 143 223 A are know from the state of the art.

### SUMMARY

The present invention is based on the idea of making a machine having a single rotatable device that allows the objects to be arranged in an alternate manner.

In the present invention, the terms "lower" and "upper" refer to the positioning of the object in which the projecting edge occupies the higher part.

Moreover, in the present invention, the expression "oriented with respect to a guide in an alternate manner" refers to the orientation with which the objects are arranged side-by-side or one on top of the other along a guide. In particular, the objects are arranged so as to be substantially parallel to one another. However, the objects are oriented the opposite way. In particular, the corresponding ends of adjacent objects point towards opposite directions. In other words, the objects are oriented so that, for example, if the first end of a first object points upwards, then the first end of a second object, adjacent to the first object and arranged directly beside the first object, points downwards, and vice-versa. This alternate structure repeats along the entire conveying direction of such objects. In other words, the projecting edge of the upper end of the first object is positioned in proximity to the lower end of the second object adjacent to the first object.

In the present invention, the term "guide" refers to any device along which objects can be channeled. The guide thus defines a conveying direction and is thus capable of channeling objects along this conveying direction of the guide. The objects can be channeled along the guide for example over the guide or inside the guide. Therefore, such a term can refer for example to a box having two walls separated by not more than double the width of the objects to be conveyed so that the objects can be conveyed along a predetermined direction. Preferably, such a guide refers to a device having a distance between the outer walls equal to the width of the projecting edge of the object so as to effectively convey such objects. Many times it is preferably to have a guide with a distance between the outer walls slightly greater than the width of the projecting edge so as to have a small tolerance in the case in which some objects have slightly different widths, and to reduce the friction against the walls of the guide. Moreover, in the present invention, the guides positioned on mobile devices also preferably have grooves configured so as to receive the projecting edges of the objects to be rotated so as to be able to prevent any possibility of them coming out during rotation. In the same way, such grooves can also be positioned on fixed devices so as to make it possible to have the walls of the guide closer together and the grooves capable of receiving the projecting edges, thereby reducing the space occupied by the guide.

In the present invention, moreover, the term "direction of the guide" refers to the direction along which the objects are conveyed along the guide, i.e. to the conveying direction of the objects positioned inside the guide.

According to the present invention a machine is provided for arranging objects comprising a first end and a projecting edge arranged in proximity to the first end that comprises a rotatable device equipped with at least one guide configured so as to allow the objects to be conveyed along the guide of the rotatable device; wherein the rotatable device is configured so as to be able to rotate the objects coming from at least one entry guide with a first orientation with respect to the entry guide, so that the objects are driven onto at least one exit guide with an orientation with respect to the exit guide that is equal or opposite to that which they had with respect to the entry guide. This solution is particularly advantageous since it makes it possible, through a particularly compact system like the one described above, to rotate the objects as desired in an effective manner. Indeed, thanks to such a device it is possible to tilt the objects with an equal or opposite orientation with respect to that which they had in the entry guide. The guide of the rotatable device is configured so as to allow the objects to be conveyed along a predetermined conveying direction, which means that the objects can slide along the guide freely, without for example requiring the help of retaining means that allow the objects to be transported.

According to the present invention a machine is provided for arranging objects comprising a first end and a projecting edge arranged in proximity to the first end in which the at least one guide of the rotatable device comprises two grooves arranged on opposite walls of the guide and configured so as to be able to receive the projecting edge of the objects so as to prevent any possibility of the objects arranged on the guide from coming out along a direction perpendicular to the direction of the guide. This solution is particularly advantageous since it makes it possible to channel the projecting edge of the guide and to thus prevent movement of the objects positioned on the guide along a direction perpendicular to the direction of the guide. Moreover, preferably the entry guide and/or the exit guide also have grooves that make it possible to receive the projecting edge and to thus reduce the distance between the opposite walls of the guide, thus occupying less space.
According to a further embodiment of the present invention a machine is provided for arranging objects comprising a first end and a projecting edge arranged in proximity to the first end in which the guide of the rotatable device is configured so as to receive the objects arranged on a single row. This configuration is particularly advantageous since it allows the entering objects to be arranged in a single row and thus allows the space used by the machine to be effectively reduced. Indeed, in the machines used in the state of the art, normally the objects are conveyed along at least two parallel rows like in the example described in patent application EP 3 002 224 A1.

According to a further embodiment of the present invention a machine is provided for arranging objects comprising a first end and a projecting edge arranged in proximity to the first end in which between the rotatable device and the exit guide there is no intermediate member configured so as to drive the objects from the rotatable device to the exit guide, oriented with respect to the exit guide in an alternate manner. This solution is particularly advantageous since it makes it possible to effectively simplify the machine that thus provides for a simple path for the objects to be arranged.

According to a further embodiment of the present invention a machine is provided for arranging objects comprising a first end and a projecting edge arranged in proximity to the first end in which the rotatable device is configured so as to rotate in an alternate manner. This solution is particularly advantageous since it makes it possible to effectively reduce the rotation angle of the rotatable device and thus to effectively reduce the time necessary to orient the objects in the desired manner.

According to a further embodiment of the present invention a machine is provided for arranging objects comprising a first end and a projecting edge arranged in proximity to the first end in which the rotatable device is configured so as to rotate continuously. This solution is particularly advantageous since it makes it possible to rotate the rotatable device continuously without having to have any stops, thus substantially simplifying the control of the rotatable device itself.

According to a further embodiment of the present invention a machine is provided for arranging objects comprising a first end and a projecting edge arranged in proximity to the first end in which the rotatable device is configured so as to rotate in the same direction. This solution is particularly advantageous since it makes it possible to continuously rotate the rotatable device without having to go into reverse, thus substantially simplifying the control of the rotatable device itself.

According to a further embodiment of the present invention a machine is provided for arranging objects comprising a first end and a projecting edge arranged in proximity to the first end in which the rotatable device comprises at least one retaining system of the objects configured so as to avoid any possibility of the objects coming out. This solution is particularly advantageous since it makes it possible to prevent, especially during the rotation of the rotatable device, the objects from coming out. In addition, such a retaining system also makes it possible, through the opening and closing thereof, to regulate the entry of the objects inside the rotatable device.

According to a further embodiment of the present invention a machine is provided for arranging objects comprising a first end and a projecting edge arranged in proximity to the first end in which the entry guide is equipped with a system for controlling the motion of the objects to regulate the entry of the objects in the rotatable device. This solution is particularly advantageous since it makes it possible to regulate the movement of the objects with extreme precision before being introduced inside the rotatable device. This makes it possible, through the opening and closing of the motion control system, to rotate the objects effectively without problems and/or slowing down.

According to a further embodiment of the present invention a machine is provided for arranging objects comprising a first end and a projecting edge arranged in proximity to the first end in which the rotatable device comprises a single guide configured so as to be able to contain at least one of the objects. This solution is advantageous since it makes it possible to have a rotatable body that is particularly simple and easy to make.

According to a further embodiment of the present invention a machine is provided for arranging objects comprising a first end and a projecting edge arranged in proximity to the first end in which the rotatable device comprises two guides arranged on the same plane, each of which is configured so as to be able to contain at least one of the objects. This solution is particularly advantageous since it makes it possible, thanks to the presence of two guides, to speed up the orientation process of the objects also making it possible, for example through a single revolution of the rotatable device, to arrange more than one object in the exit guide.

According to a further embodiment of the present invention a machine is provided for arranging objects comprising a first end and a projecting edge arranged in proximity to the first end in which the guides of the rotatable device are perpendicular to one another. This solution is particularly advantageous since it makes it possible to have a rotatable device in which, thanks to a 90° rotation, the objects are effectively driven inside the exit guide. In the case for example in which the objects are supplied along an entry guide along a direction perpendicular with respect to the force of gravity, the objects can be effectively extracted from the rotatable device thanks simply to the effect that the force of gravity exerts on such objects.

According to a further embodiment of the present invention a machine is provided for arranging objects comprising a first end and a projecting edge arranged in proximity to the first end in which a first guide of the rotatable device is a through guide and a second guide of the rotatable device is blind. This solution is particularly advantageous since having a blind guide makes it possible to keep the same orientation with respect to the exit guide that it had on the entry guide. On the other hand, having a through guide makes it possible to tilt the orientation of the object during the rotation of the rotatable device as desired. This is because, depending on which opening of the through guide is used to take out the object contained in it, with a through guide it is possible both to tilt the orientation of the object and to keep it unchanged.

According to a further embodiment of the present invention a machine is provided for arranging objects comprising a first end and a projecting edge arranged in proximity to the first end in which the rotatable device comprises at least n parallel guides arranged on n mutually different planes in which n is a natural number strictly greater than 1. Here, the term plane is meant to indicate the plane perpendicular to the rotation axis of the rotatable device and passing through the direction of a guide. This solution is particularly advantageous since it makes it possible to work in parallel with many rows of objects. By coupling this characteristic with a rotatable device having many guides parallel to one another it is possible to have a rotatable device equipped with a single motor that, however, is capable of orienting many parallel rows of objects. In this way, there is an effective reduction in the time required to orient a predetermined amount of objects. In the same way, with such a machine it is possible to obtain a high potentiality in terms of objects oriented in a certain time period. All of this is obtained at low cost since such potentiality is given by the rotation of a single rotatable device. For the same potentiality in terms of objects oriented in a certain time period, indeed, having a single machine like the one presented here also occupies less space, as well as of course being more economically advantageous, with respect to a plurality of machines each having a single entry guide.

According to a further embodiment of the present invention a machine is provided for arranging objects comprising a first end and a projecting edge arranged in proximity to the first end in which the n parallel guides can be equipped with independent motorizations so as to ensure independent motion. This solution is particularly advantageous since, for example, it makes it possible to make each tilting line independent from the others. Therefore, in the case in which a particular line is slowed down, the others will not undergo such slowing down. Moreover, such a solution is particularly advantageous because it allows the different tilting lines to be offset as desired.

According to a further embodiment of the present invention a machine is provided for arranging objects comprising a first end and a projecting edge arranged in proximity to the first end in which the exit guide comprises a plurality of exit guides configured so as to be able to be translated so as to house the objects exiting from the rotatable device. This solution is particularly advantageous since it makes it possible to quickly move on to filling another. This is allowed by the translation of the exit guide, which as stated earlier can be simply represented by cases that will contain the objects. Indeed, in the case for example in which it is wished to fill up many packages, it will be sufficient to translate the packages after a predetermined time period and move on to filling a subsequent package. More preferably, such a plurality of exit guides is configured so as to be able to be translated in different directions and with independent motion from one another. Such a solution is particularly advantageous because it makes it possible to translate the guides along any direction thus having the possibility of choosing the axis along which to position the exit guides and along which to move them.

According to a further embodiment of the present invention a machine is provided for arranging objects comprising a first end and a projecting edge arranged in proximity to the first end in which the rotatable device is configured so as to rotate around an axis perpendicular with respect to a plane formed by the direction of the entry guide and by the direction of the exit guide. This solution is particularly advantageous since it makes it possible to effectively reduce the axial extension of the machine that can thus work on a single plane that is the one formed by the direction of the entering guide and by the direction of the exiting guide.

According to a further embodiment of the present invention a machine is provided for arranging objects comprising a first end and a projecting edge arranged in proximity to the first end in which the machine further comprises a second exit guide positioned along the same direction as the entry guide on the opposite side with respect to the rotatable device. This solution is particularly advantageous since it is possible to convey a predetermined number of objects inside the second. Therefore, the presence of the second exit guide allows the objects to be transferred along the second exit guide without manipulating them and to be sent for example to another packaging system such as a pack configured so as to receive a plurality of objects.

According to a further embodiment of the present invention a machine is provided for arranging objects comprising a first end and a projecting edge arranged in proximity to the first end in which the rotatable device is configured so as to rotate around an axis coinciding with the direction of the entry guide and with the direction of the exit guide. This solution is particularly advantageous since it makes it possible to have a perfectly linear system since it all extends along the same direction: from the entry guide passing through the rotatable device up to the exit guide. Therefore, in this way, it is thus possible to effectively reduce the space occupied by the machine.

According to a further embodiment of the present invention a machine is provided for arranging objects comprising a first end and a projecting edge arranged in proximity to the first end in which the rotatable device has an inner passage configured so as to be able to ensure the passage of the objects, wherein the inner passage of the rotatable device comprises a plurality of grooves configured so as to form a first guide and a second guide. This solution is particularly advantageous since it makes it possible to have a rotatable device capable of making the objects pass inside it and also rotating them inside it. Therefore, such a rotatable device is particularly compact and occupies little space.

According to a further embodiment of the present invention a machine is provided for arranging objects comprising a first end and a projecting edge arranged in proximity to the first end in which the first guide and the second guide are offset by 180°. This solution is particularly advantageous since it makes it possible to alternate the orientation of the objects through clock-wise and/or counter-clockwise half-rotations. This thus makes it possible to have a symmetrical system.

According to a further embodiment of the present invention a machine is provided for arranging objects comprising a first end and a projecting edge arranged in proximity to the first end in which the rotatable device is configured so as to be able to be rotated around its own axis through the rotation of a rotating shaft parallel to the rotation axis of the rotatable device and is connected thereto through a transmission member. This solution is particularly advantageous since it makes it possible to arrange the drive shaft in any position and to connect the rotating shaft to the rotatable device through a simple transmission member the dimensions of which can change depending on where the rotating shaft is positioned.

According to a further embodiment of the present invention a machine is provided for arranging objects comprising a first end and a projecting edge arranged in proximity to the first end in which the exit guide is arranged in the same direction as the entry guide on the opposite side with respect to the rotatable device. This solution is particularly advantageous since it makes it possible to have a single conveying direction of the objects, thereby, after having oriented the objects through the rotatable device with a certain orientation, conveying along the same direction, thus making it possible to have a conveying system of the objects that is particularly compact.

According to a further embodiment of the present invention a machine is provided for arranging objects comprising a first end and a projecting edge arranged in proximity to the first end in which the direction of the exit guide is perpendicular with respect to the direction of the entry guide. This solution is advantageous since it makes it possible, thanks to the rotation of the rotatable device by 90°, to use for example the force of gravity to take the objects out from the rotatable device in the case in which the entry guide is arranged on a horizontal plane (plane perpendicular with respect to the force of gravity).

According to a further embodiment of the present invention a method is provided for arranging objects comprising a first end and a projecting edge arranged in proximity to the first end in which the method comprises the following steps:
a) conveying the objects in an entry guide a;; having the same orientation;
b) rotating the objects;
c) releasing the objects in an exit guide with the same orientation that they had in the conveying step with respect to the entry guide or with an opposite orientation;
wherein the release step is carried out after the rotation step.
This solution is particularly advantageous since it makes it possible, through a particularly simple method like the one described above, to rotate the objects as desired in an effective manner.

According to a further embodiment of the present invention a method is provided for arranging objects comprising a first end and a projecting edge arranged in proximity to the first end in which the rotation step of the objects is carried out around an axis perpendicular with respect to a plane formed by the direction of the entry guide and by the direction of the exit guide. This solution is particularly advantageous since it makes it possible to effectively reduce the axial extension of the machine that uses such a method, which can thus work on a single plane that is the one formed by the direction of the entering guide and by the direction of the exiting guide.

According to a further embodiment of the present invention a method is provided for arranging objects comprising a first end and a projecting edge arranged in proximity to the first end in which the rotation step of the objects is carried out around an axis coinciding with the direction of the entry guide and with the direction of the exit guide. This solution is particularly advantageous since it makes it possible to have a perfectly linear system since it all develops along the same direction: from the entry guide passing through the rotatable device up to the exit guide. Therefore, in this way it is thus possible to effectively reduce the space occupied by the machine.

According to a further embodiment of the present invention a method is provided for arranging objects comprising a first end and a projecting edge arranged in proximity to the first end in which the rotation step of the objects is carried out in an alternate manner. This solution is particularly advantageous since it makes it possible to effectively reduce the rotation angle and thus to effectively reduce the time necessary to orient the objects in the desired manner.

According to a further embodiment of the present invention a method is provided for arranging objects comprising a first end and a projecting edge arranged in proximity to the first end in which the rotation step of the objects is carried out in the same direction. This solution is particularly advantageous since it makes it possible to rotate without having to reverse directions, thus substantially simplifying the control of the rotation.

According to a further embodiment of the present invention a method is provided for arranging objects comprising a first end and a projecting edge arranged in proximity to the first end in which the rotation step of the objects is carried out continuously. This solution is particularly advantageous since it makes it possible to rotate without having to carry out stops, thus substantially simplifying the control of the rotation.

### BRIEF DESCRIPTION OF THE FIGURES

The present invention will be described with reference to the attached figures in which the same reference numerals and/or symbols indicate the same parts and/or similar and/or corresponding parts of the system. In the figures:
Figures 1a, 1b schematically illustrate a three-dimensional view of an object comprising a first end and a projecting edge arranged with alternate orientation inside a package;
Figure 2a, 2b schematically illustrate a three-dimensional view of a machine for arranging objects according to an embodiment of the present invention;

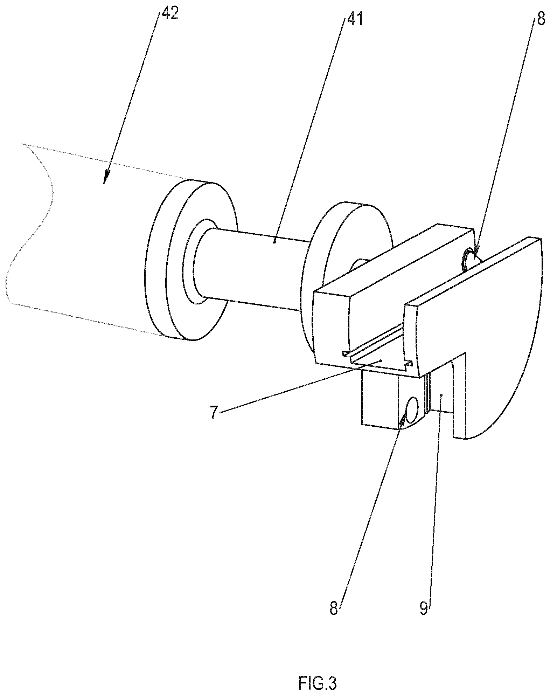

Figure 3 schematically illustrates a three-dimensional view of the rotatable device according to an embodiment of the present invention;
Figure 4 schematically illustrates the entry of an object inside the first guide according to a particular embodiment of the present invention;
Figure 5 schematically illustrates a three-dimensional view of the rotation of the rotatable device according to a particular embodiment of the present invention;
Figure 6 schematically illustrates a three-dimensional view of the machine after the device has been stopped according to a particular embodiment of the present invention;
Figure 7 schematically illustrates a section view of the machine of figure 6 according to a particular embodiment of the present invention;
Figure 8 schematically illustrates a three-dimensional view of the rotation of the rotatable device according to a particular embodiment of the present invention;
Figure 9 schematically illustrates a section view of the machine after the device has been stopped according to a particular embodiment of the present invention;
Figure 10 schematically illustrates a three-dimensional view of a machine for arranging objects according to a particular embodiment of the present invention;
Figure 11 schematically illustrates a three-dimensional view of a machine for arranging objects according to a particular embodiment of the present invention;
Figure 12 schematically illustrates a three-dimensional view of a machine for arranging objects according to a particular embodiment of the present invention;

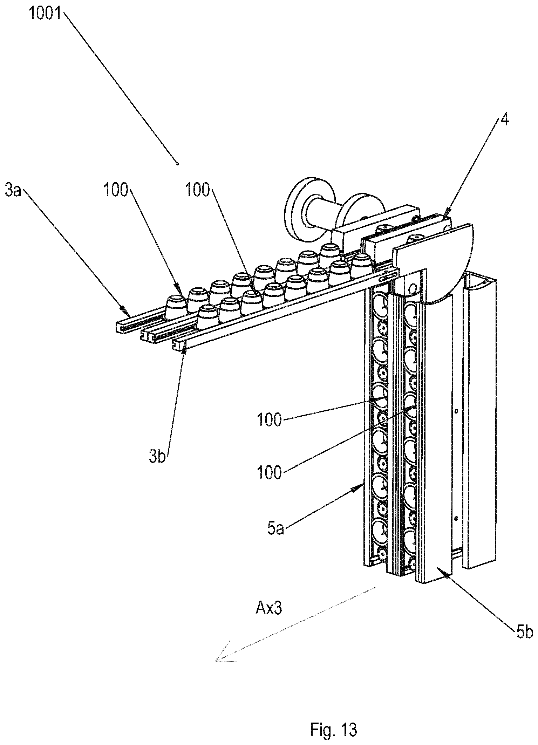

Figure 13 schematically illustrates a three-dimensional view of a machine for arranging objects according to a particular embodiment of the present invention;
Figure 14 schematically illustrates a three-dimensional view of a machine for arranging objects according to a particular embodiment of the present invention;
Figure 15 schematically illustrates a three-dimensional view of a machine for arranging objects according to a particular embodiment of the present invention;
Figure 16 schematically illustrates a three-dimensional view of a detail of the machine for arranging objects of figure 14 according to a particular embodiment of the present invention;
Figure 17 schematically illustrates a three-dimensional view of the rotatable device of the machine for arranging objects of figures 14 and 15 according to a particular embodiment of the present invention;

### DETAILED DESCRIPTION

Hereinafter, the present invention is described with reference to particular embodiments as illustrated in the attached tables of drawings. However, the present invention is not limited to the particular embodiments described in the following detailed description and represented in the figures, but rather the described embodiments simply exemplify the various aspects of the present invention, the purpose of which is defined by the claims. Further modifications and variations of the present invention will be clear to those skilled in the art.

### Main embodiment

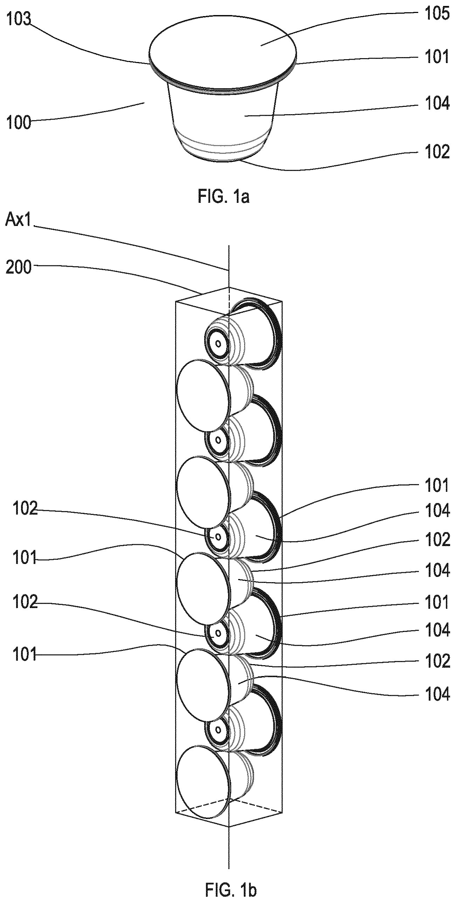

Figure 1a shows an object 100 having two ends: one upper 101 and one lower 102. The upper end 101 has a projecting edge 103 that projects from such an end. For example, such an object 100 can be a capsule used commonly for preparing beverages like coffee or similar. However, it is clear that such objects can also be for example small containers or more generally bodies having an upper projection 103.

Such objects 100 also have a side outer surface 104 that is configured so as to connect the upper end 101 with the lower end 102 and can have any shape like for example cylindrical, frusto-conical or even a combination thereof.

The projecting edge 103 of the object 100 makes it difficult to effectively pack a plurality of objects 100 inside a package. Indeed, the presence of the projecting edge 103, being bulky, makes it difficult to effectively use the space inside the package within which such objects 100 are placed.

As shown in figure 1b, in order to makes it possible to effectively use the space of the box 200 inside which such objects 100 are contained, generally they are arranged with alternate orientation so as to effectively fill the space of the package inside which they are contained.

Therefore, as shown in the example in the figures, in the case in which the objects have been introduced inside the package 200 along the conveying direction Ax1 they are arranged one on top of the other. Such objects 100 are oriented alternately with the upper end 101 facing to the left and with the upper end 101 facing to the right. In this way, it is thus possible to effectively reduce the space occupied by said objects 100 with respect to the case in which they are always inserted along the direction Ax1 but all having the same orientation towards the right/left.

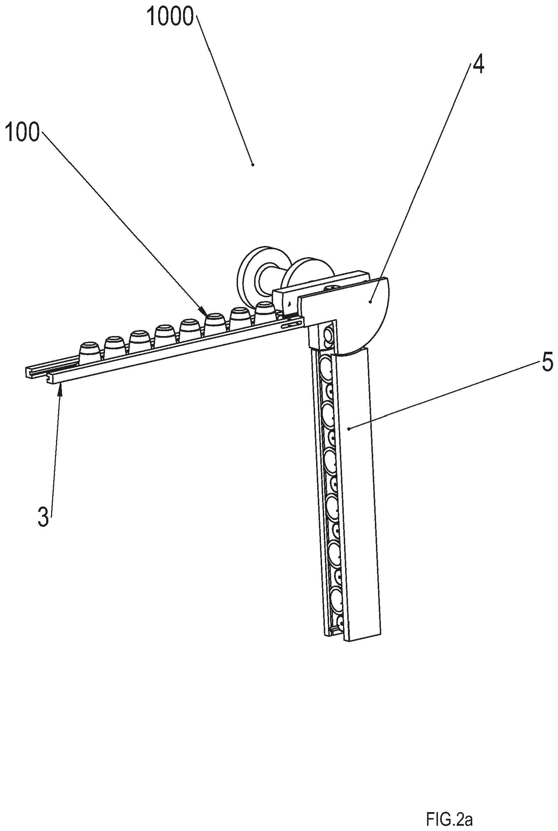

As shown in figure 2a, such an orientation process of the objects 100 is carried out through a machine 1000. Such a machine 1000 comprises a rotatable device 4. Such a rotatable device 4 is configured so as to be able to receive the objects 100 and, after having rotated them, is configured so as to be able to make them come out with a desired orientation.

In the example of figure 2a the rotatable device 4 can be connected to an entry guide 3 configured so as to supply the objects 100 and to an exit guide 5 configured so as to receive the objects 100 exiting from the rotatable device 4.

As stated earlier, both the entry guide 3 and the exit guide 5 are represented by any element having walls that are preferably slightly further apart with respect to the width of the projecting edge 103 of the object 100. For example, such exit guides 5 can be represented by a case, or by a package that contains the objects 100 to be for example put on sale, or even by conveying tracks like those represented in the figures.

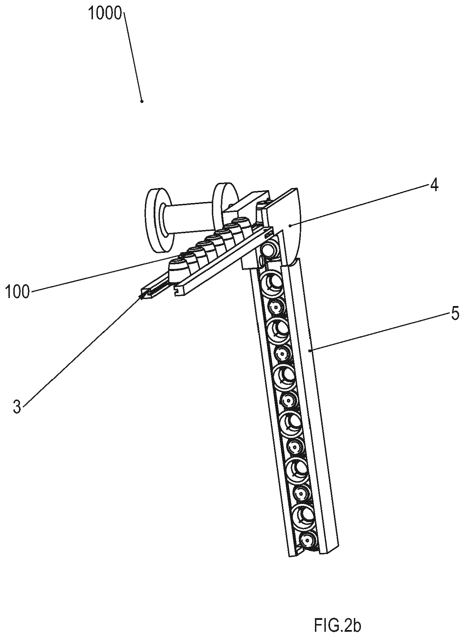

As can clearly be seen from the view of figure 2b, the objects 100 can be conveyed along the entry guide 3 towards the rotatable device 4. Such objects 100 preferably all have the same orientation that, in the particular case depicted, corresponds to having the upper end 101 facing downwards. However, it is clear that the orientation could very well also be the opposite, i.e. the upper end facing upwards.

Such objects 100 are then conveyed in the exit guide 5 with alternate orientation as described above. As shown in the figures, the exit guide 5 can be represented by a guide having two parallel walls adapted for conveying the objects 100, previously oriented, along an exit direction.

As shown in the figure, the rotatable device 4 is preferably formed from a rotatable shaft 41 configured so as to ensure the rotation of a rotatable terminal 42. The rotatable shaft 41 is preferably connected to a control member capable of regulating the rotation of the shaft 41 and thus of the terminal 42 connected thereto.

As shown in figure 2a, the rotatable device 4 is preferably configured so as to rotate around an axis perpendicular with respect to the plane formed by the direction of the entry guide 3 and by the direction of the exit guide 5.

As shown in the figure, according to this particular embodiment, the rotatable device has a rotatable terminal 42 having two guides: a first guide 7 and a second guide 9. Both of the guides 7 and 9, as shown in the figures, have two grooves. Each of the grooves is arranged on an opposite side of the guide, and they are configured so as to receive the projecting edge 103 of the objects 100 to be rotated. In this way, the objects 100 can be conveyed along the first guide 7 and the second guide 9 having the projecting edge channeled in such grooves and, during the rotation of the rotatable terminal 42, it will be possible in this way to prevent the objects 100 from coming out along a direction perpendicular to the direction of each guide.

The first guide 7, in this particular embodiment, is a through guide. Therefore, it is thus possible, for the object 100 that is located in such a guide, to come out from either of the two openings of the first guide 7.

The second guide 9, in this particular embodiment, is a blind guide that thus has a single entry/exit. Therefore, the object 100 that will be introduced inside it can only come out from the position in which it entered inside the second guide 9.

Moreover, the first guide 7 and the second guide 9 preferably have at least one retaining system of the objects 8 capable of stopping any possibility of the objects 100 coming out during the rotation of the rotatable device 4. Such a retaining system of the objects 8 is represented, in this particular case shown in the figures, by a projection configured so as to be able to be extended and/or retracted along a direction perpendicular with respect to the conveying direction of the objects 100 inside the two guides 7 and 9.

Therefore, in the case in which it is wished to prevent any possibility of the objects 100 coming out along a direction parallel to the direction of the guides 7 and 9, during the rotation of the rotatable device 4, such a projection will project inside the guides 7 and 9 so as to stop the object 100 that, due to the force of gravity and the centrifugal forces that act on it during the rotation of the rotatable device, could otherwise have come out from the guides 7 and 9.

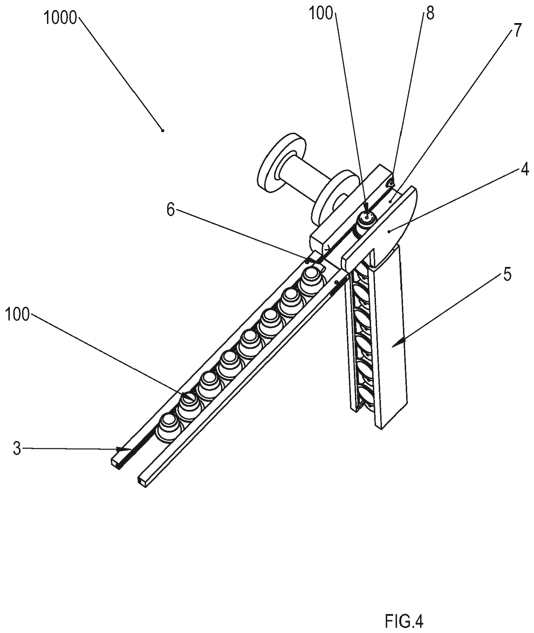

Hereinafter, with reference to figures 4 to 9, the operative steps of the machine 1000 shown in figure 2 are described and a method for orienting the objects 100 according to the main embodiment of the present invention is then described.

As shown in figure 4, the entry guide 3 has a motion control system 6 configured so as to regulate the flow of objects 100 inside the rotatable device 4. Such a system 6 is represented, in this particular case shown in the figures, by a projection configured so as to be able to be extended and/or retracted along a direction perpendicular with respect to the conveying direction of the objects 100.

Therefore, in the case in which it is wished to temporarily stop the flow of objects 100, such a projection will project inside the guide so as to stop the object 100 before it has entered inside the rotatable device 4. In the case in which, after a certain amount of time, it is wished to allow the object 100 to enter inside the rotatable device 4, the projection will be retracted and access will thus be permitted.

As will be explained hereinafter, with such a motion control system 6 it is also possible to regulate the number of objects made to pass inside the rotatable device 4. Therefore, for example, in the case in which it is wished to pass a greater number of objects 100 it will be possible to leave the system 6 in retracted position for a longer time period.

Based on alternative embodiments of the present invention, the motion control system 6 can be a coupling that sets the rate of the objects to be made to pass and/or a device that transfers a predetermined precise motion to the objects to be made to pass.

As shown in the figure, a first object 100 is made to enter inside the first guide 7. Such an object can be moved for example through compressed air, vibration or a lateral transportation chain capable of driving such an object 100 inside the guide along a desired direction. The object 100 entered in the first guide 7, which is the through guide, will stop against the retaining system of the objects 8 that will be in a stopped condition and thus projecting inside the first guide 7 (differently from what is depicted in the figures).

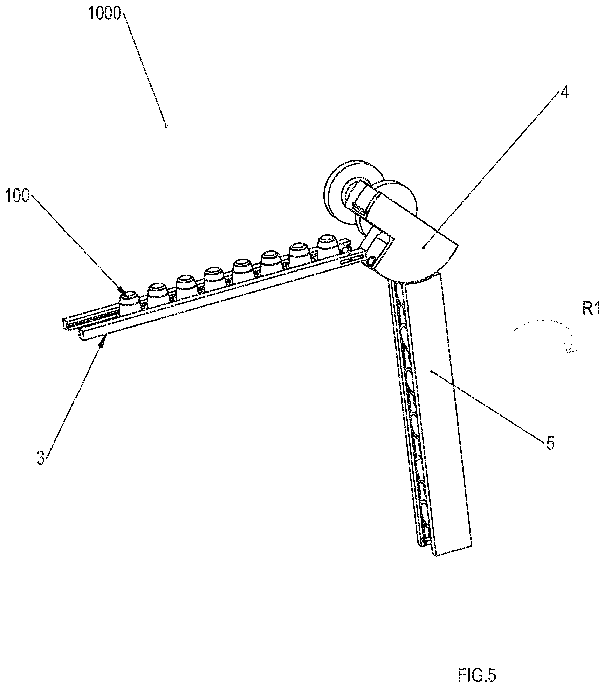

After this, as shown in figure 5, the rotatable device 4, in the particular embodiment represented in the figures, will preferably rotate by 90° in the clockwise direction R1. In this way, after the rotation by 90° the second guide 9 will be aligned with the entry guide 3 and the first guide 7 of the rotatable device 4 will be aligned with the exit guide 5.

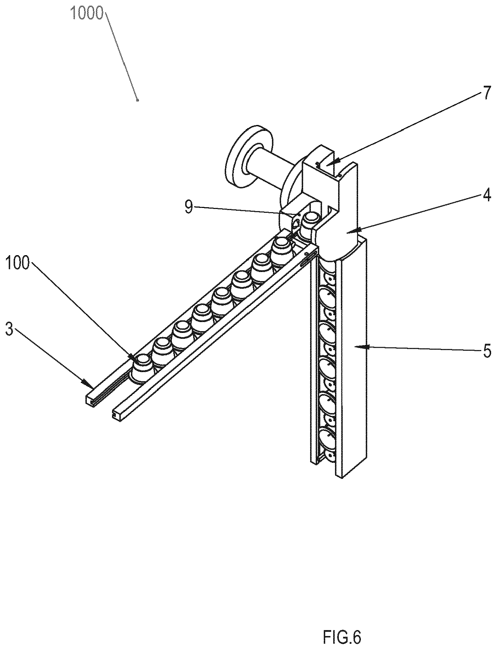

As shown in figure 6, after having been rotated by 90°, the rotatable device 4 is ready to receive the new object 100 inside the second guide 9. Therefore, the motion control system 6 arranged on the entry guide 3, retracting, will allow the entry of such an object 100 inside the second guide 9.

In the same way, the object 100 that is located inside the first guide 7 of the rotatable device 4 is ready to be conveyed inside the exit guide 5. Therefore, the two processes described above, i.e. that of entry of a new object 100 inside the second guide 9 and that of exit of the object 100 contained inside the first guide 7, can preferably be carried out simultaneously so as to reduce the time necessary to carry out both processes.

Therefore, the retraction of the retaining system of the objects 8 positioned on the first guide 7 can take place at the same time as the retraction of the motion control system of the objects 6 positioned on the entry guide 3. However, it is clear that for various requirements it will also be possible to temporally separate two processes making them occur in sequence one after the other with the order dictated by the particular constructive requirement.

It is clear that the rotation by 90° refers to the particular embodiment described in the figures, where the direction of the entry guide 3 is perpendicular with respect to the direction of the exit guide 5. However, in the case for example in which the angle formed between the direction of the entry guide 3 and of the exit guide 7 is equal to 60°, the rotation of the rotatable device 4 will in this particular case be equal to 60°.

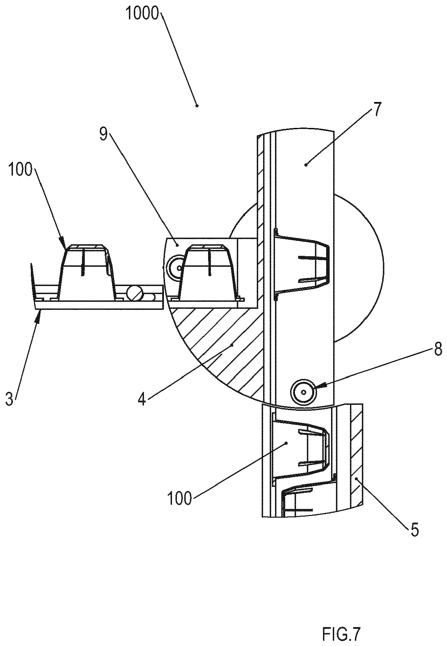

As shown in the section view of figure 7 of the machine 1000, the first guide 7 is perfectly aligned with the exit guide 5 whereas the second guide 9 is perfectly aligned with the entry guide 3 so that the movement of the objects 100 can be carried out without problems and/or hindrances.

The exit of the object 100 present inside the first guide 7 can take place, as stated earlier, thanks to the opening of the retaining device of the objects 8.

In the particular embodiment described in the figures, given that the direction of action of the force of gravity and the direction of the exit guide 5 are parallel, the exit of the object 100 from the rotatable device 4 is ensured by the force of gravity. However, in the case in which such a force is not sufficient, an additional system can be installed, such as a movement device or a blower that makes it possible to extract the object 100 and convey it inside the exit guide 5.

As stated earlier, the second guide 9 can also have a retaining system of the objects 8 analogous to the one present inside the first guide 7. Therefore, also in this case by extending and retracting such a retaining system of the objects 8, it is thus possible to prevent the possibility of such an object 100 coming out during the rotation of the rotatable device 4.

Also in this case, in order to allow the object 100 to enter inside the second guide 9, it is possible to use the motion control system of the objects 6 described above.

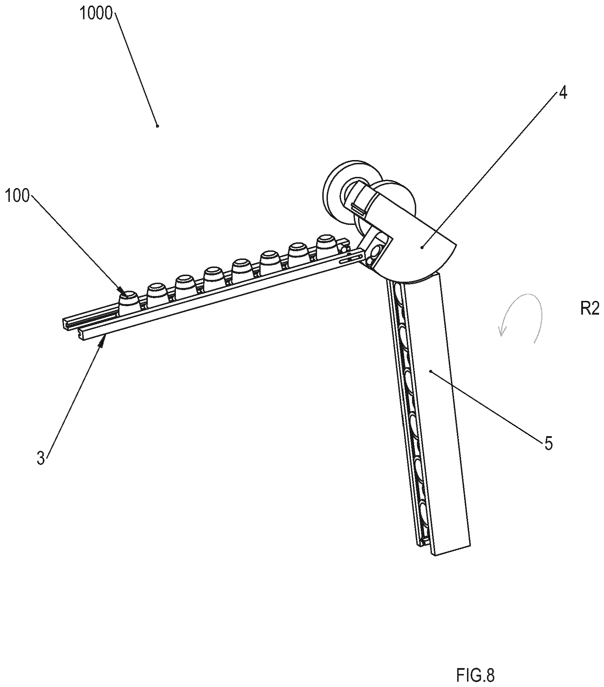

After an object 100 is inserted inside the second guide 9 and the object 100 that was present inside the first guide 7 is conveyed inside the exit guide 5, as shown in figure 8, the rotatable device 4 can be rotated by 90° in a counter-clockwise direction R2 to allow the first guide 7 to receive a new object 100 and the second guide 9 to convey the object 100, arranged in it, inside the exit guide 5.

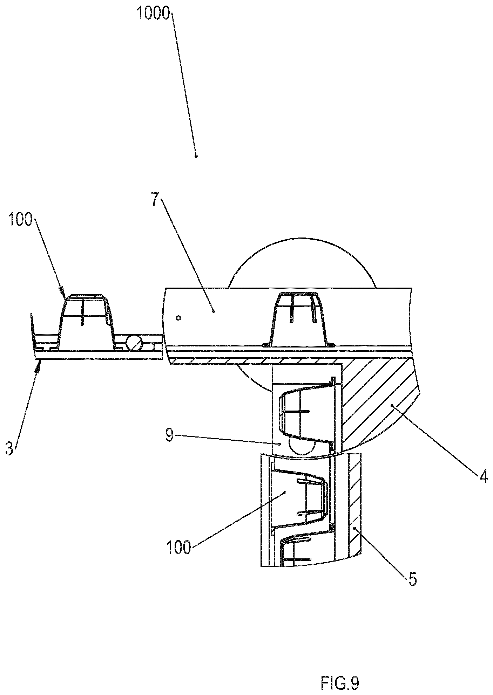

As shown in figure 9, at this point the first guide 7 of the rotatable device 4 is perfectly aligned with the entry guide 3 whereas the second guide 9 is perfectly aligned with the exit guide 5. At this point, in the same ways described earlier, the release and conveying of the object 100 contained inside the second guide 9 of the rotatable device 4 inside the exit guide 5 and the entry of a new object 100 inside the first guide 7 of the rotatable device 4 take place.

As can be clearly seen, looking respectively at figures 7 and 9, the objects are conveyed inside the exit guide 5 with alternate orientation. In the particular example described by the figures, the first guide conveys the objects 100 with the upper end 101 facing to the left, vice-versa the second guide 9 conveys the objects 100 with the upper end 101 facing to the right.

As can be seen from the above description, whereas the first guide 7 is configured so as to allow the objects 100 conveyed in it to come out from the opposite side with respect to that in which they entered, thus making it possible to continue in the exit guide 5 along with the same orientation with which they entered in the first guide 7, the second guide 9 is configured so as to make objects 100 introduced in it come out from the same side at which they entered and then convey them with a tilted orientation. This exact characteristic is what makes it possible to alternate the orientations of the objects 100 inside the exit guide 5.

It is clear that if the orientation of the objects 100 inside the entry guide 3 was the opposite to that depicted, the orientation of the objects 100 inside the exit guide 3 would be exactly the opposite. However, it will still be alternate.

This process described above can be repeated infinite times and thus makes it possible, through a rotation of the alternate type, to effectively convey the objects 100 inside the exit guide 5 having an alternate orientation.

However, it is also possible for the rotatable device 4 to rotate continuously. This way (not shown in the figures) will not change anything of the conveying processes described above, and indeed all that will change will be the direction of rotation of the rotatable body 4 as will be clear hereinafter.

Hereinafter a brief description of how such a process can be carried out will be given.

After a first object 100 has been conveyed inside the first guide 7, the rotatable device 4 will rotate in the clockwise/counter-clockwise direction until such a first guide 7 is perfectly aligned with the exit guide 5.

At this point, the object 100 contained inside the first guide 7 will be conveyed inside the exit guide and a new object 100 will be conveyed inside the second guide 9 in the same ways described above. After this, by rotating in the same clockwise/counter-clockwise direction described above, the rotatable device 4 will be rotated until the second guide 9 is aligned with the exit guide 5 and consequently until the entry guide 3 is aligned with the first guide 7.

This process described above is thus analogous to the alternate one described above. The advantage obtained through such a system is that the rotatable device can always rotate in the same direction. In addition, such a rotatable device 4 can also be made to rotate continuously. On the other hand, the drawback thereof is that in this way the rotatable device 4 will complete revolutions of 360° and therefore there will be greater rotations with respect to the case of alternate motion. This could also take longer revolution times.

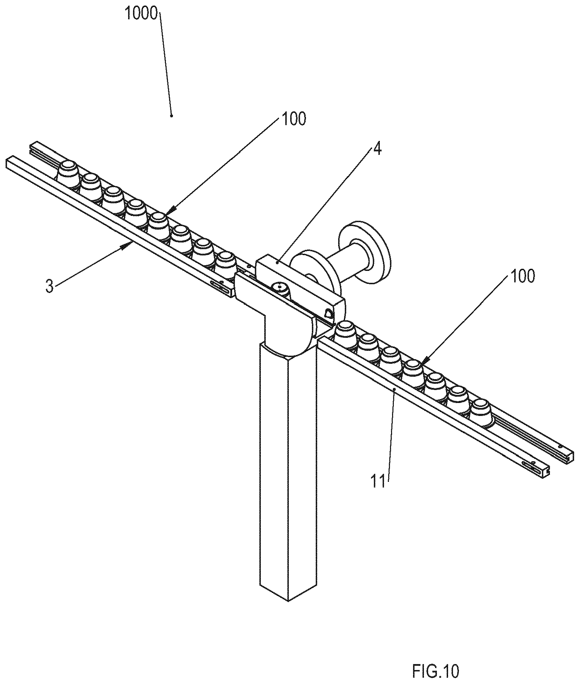

In figure 10 a further embodiment of the present invention is presented. As described earlier, the motion control system of the objects 6 can be configured so as to be able to ensure the passage of a predetermined number of objects 100.

Therefore, according to this embodiment, a machine 1000 is arranged having a second exit guide 11 positioned along the same direction as the entry guide 3 on an opposite side with respect to the rotatable device 4. Therefore, an object 100 can, starting from the entry guide 3, enter into the first guide 7 of the rotatable device 4 and exit from the rotatable device 4 and enter into the second exit guide 11.

Therefore, it is thus possible to convey a predetermined number of objects 100 inside the second exit guide 11. After such objects have been driven inside the second exit guide 11, it is possible to begin conveying the objects inside the first guide 7 and the second guide 9 of the rotatable device 4 as described earlier.

The presence of the second exit guide 11 makes it possible, in the case in which it is not only wished to alternate the objects 100 on the exit guide 5 described above, to transfer the objects 100 also along the second exit guide 11 without manipulating them and to send them for example to another packaging system such as a packet (not depicted) configured so as to receive a plurality of objects.

### Second embodiment

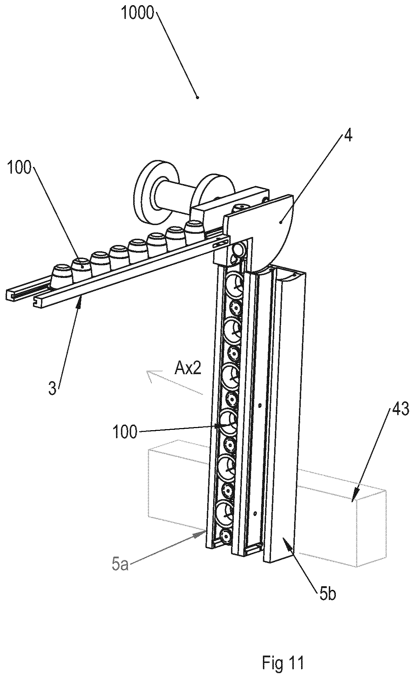

As shown in figure 11, the exit guide 5 can preferably be adjacent to one or more exit guides 5a, 5b forming a plurality of exit guides. In the example depicted in figure 10, two exit guides 5a, 5b are adjacent to one another.

This particular embodiment makes it possible to fill for example cases or packages one after the other in a quick and efficient manner. After a predetermined number of objects 100 have been conveyed inside the exit guide 5a, the exit guide 5a containing the objects 100 can be translated together with the exit guide 5b arranged adjacent along the translation axis Ax2.

Such a translation along the translation axis Ax2 can be ensured by movement means 43, like for example a translation chain.

After the exit guide 5a that, in the particular example presented in figure 10, is arranged to the left, has been translated to the left in the direction indicated by the translation axis Ax2, the objects can be conveyed in a second exit guide 5b arranged to the right with respect to the exit guide 5a.

### Third embodiment

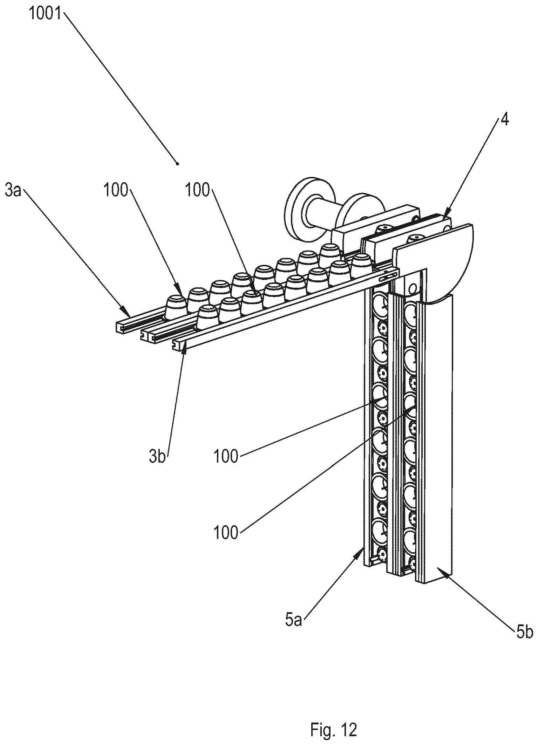

According to another embodiment of the present invention, as shown in figure 12, the machine 1001 can have a plurality of entry guides, a plurality of exit guides and a rotatable device 4 having a plurality of first guides and a plurality of second guides inside it.

In the particular example represented in figure 12, the plurality of entry guides is made up of two entry guides 3a, 3b whereas the plurality of exit guides is made up of two exit guides 5a, 5b. Moreover, the rotatable device 4 has two first guides 7a, 7b and two second guides 9a, 9b. However, it is clear to those skilled in the art that such a number of parallel guides can be increased as desired. The two first guides 7a, 7b and the two second guides 9a, 9b will have analogous characteristics to those described for the first embodiment.

Moreover, the parallel guides of the rotatable device can be connected to independent motorizations for example through concentric actuation shafts.

The machine 1001 having such a configuration makes it possible to convey the objects 100 inside the plurality of exit guides in parallel. The orientation process is exactly the same as described above since for example the first entry guide 3a, the first guide 7a of the rotatable device 4, the second guide 9a of the rotatable device 4, and the first exit guide 9a correspond for example to the orientation line of the machine 1000 described in the main embodiment of the present invention.

In parallel to this orientation line, there will be a plurality of other orientation lines characterized in that they can work parallel with respect to the other orientation lines since the rotation of the rotatable device 4 regulates the orientation of each orientation line.

For example, in the case in which it is wished to have x parallel lines it will be sufficient to add x orientation lines in parallel.

Moreover, as shown in the particular example of figure 12, also in this case the machine 1001 can have exit guides 5a, 5b configured so as to be able to be translated along the translation axis Ax3.

Such a translation along the axis Ax3 can, also in this case, be ensured by movement means, like for example a translation chain.

For example, after the plurality of guides 5a, 5b have been filled, in the particular example presented in figure 10, such guides are moved forwards and two new guides are positioned in their place so as to be able to receive said objects 100 coming from the rotatable device 4.

### Fourth embodiment

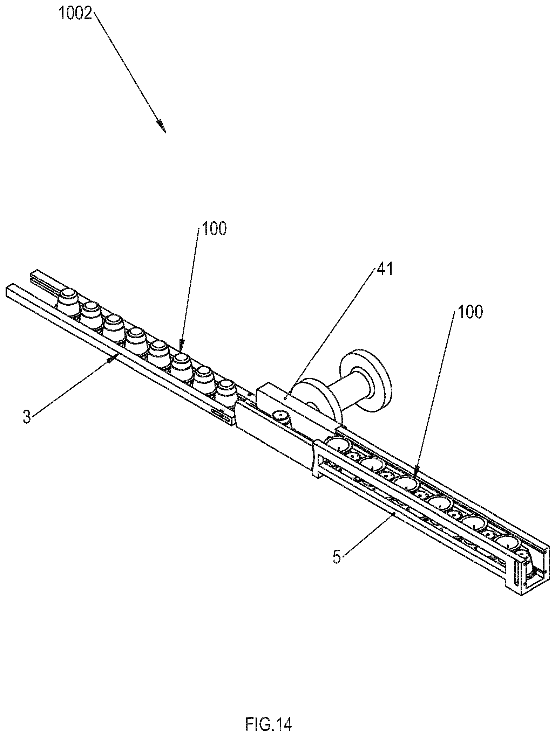

In figure 14 a further embodiment of the present invention is presented. The figure shows a machine 1002 which has a rotatable device 41 having a single through guide 7. Also in this case, as shown in the figures, such a through guide 7 will have two grooves arranged on opposite faces of the guide so as to allow the projecting edges 103 of the objects 100 to be tilted to be at least partially inserted in such grooves

In this case, the exit guide 5 can preferably be arranged along the same direction as the entry guide 3. In this way, the objects 100 present in the entry guide 3 are driven inside the exit guide 5 with an orientation with respect to the exit guide 5 that is equal or opposite to that which they had with respect to the entry guide 3.

The rotatable device 41 is configured so as to allow the objects 100 to be conveyed inside the exit guide both after having carried out a rotation by 180° inside the rotatable device 41 and in the absence of any rotation of the rotatable device 41. The rotatable device 41 can be configured both to rotate in an alternate and continuous manner.

### Fifth embodiment

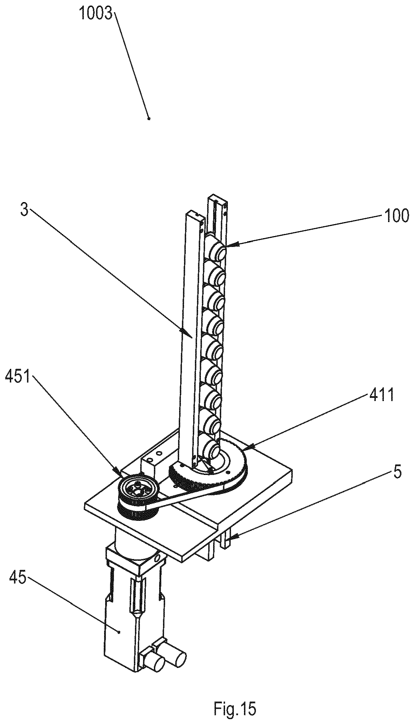

According to another embodiment of the present invention, as shown in figure 15 the machine 1003 can have a rotatable device 411 that is configured so as to rotate around an axis coinciding with the direction of the entry guide 3 and with the direction of the exit guide 5.

As shown in the figure, the rotatable device 411 is connected to a rotation shaft 451 through for example a belt or any other transmission member capable of effectively allowing a transmission of the rotary motion of the rotation shaft 451 to the rotatable device 411.

In turn, the rotation shaft 451 is connected to a motor 45, like for example an electric motor, which can in turn be connected to a control device that regulates the motor 45.

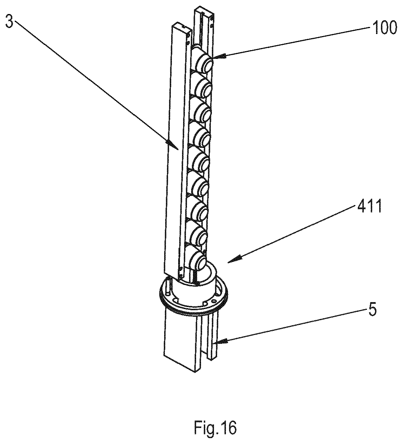

As shown in the particular view of figure 16, the entry guide 3 and the exit guide 5 are preferably arranged along the same direction. However, as stated above, both the entry guide 3 and the exit guide 5 could also be curvilinear.

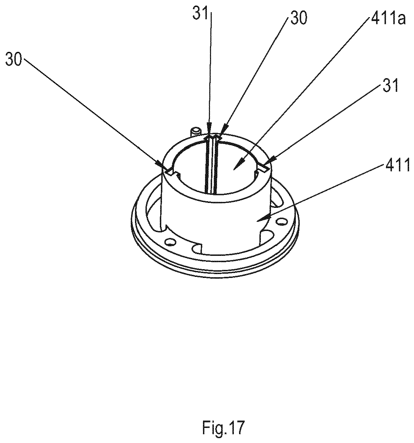

The rotatable device 411, shown in figure 17, has an inner passage 411a inside it configured so as to ensure the passage of the objects through it. On the surface of the inner passage 411a there are two guides 30 and 31. Preferably, the two guides 30 and 31 are each formed from two grooves arranged on the inner surface of the rotatable device 411. Such guides are configured so as to be able to receive the projecting edge 103 of the objects 100.

Such guides are preferably offset by 180°. Moreover, each of the guides 30 and 31 preferably has a retaining system of the objects 8 capable of allowing the object 100 arranged inside such guides 30 and 31 to be stopped.

Hereinafter, the method for using the machine 1003 will be briefly presented.

The objects 100, in this particular embodiment, can be made to slide inside the entry guide 3, thanks for example to the effect of the force of gravity. However, it is always possible, in order to ensure an effective movement of the objects 100, to use movement systems described for the other embodiments.

Also in this case, the entry guide 3 can have a motion control system 6 for the entry in phase inside the rotatable device 411 analogous to the one described in the other embodiments.

When the motion control system 6 allows a first object 100 to come out inside the rotatable device 411, the latter will receive such an object 100 inside a first of the two guides 30 and 31. Meanwhile, the retaining system of the objects 8 prevents the object 100 from coming out from the rotatable device 411.

At this point, the rotatable device 411 can rotate preferably by 180°, retract the retaining system of the objects 8 and then convey the object 100 inside the exit guide 5. A second object 100 positioned inside the entry guide 3 will be driven inside the rotatable device and, passing through a second of the two guides 30 and 31, will be introduced directly inside the exit guide 5.

After this, a third object 100 contained inside the entry guide 3 will be driven inside the rotatable device 411 and will be held in it through the retaining system of the objects 8. After having rotated by 180°, the process described above for releasing such a third object 100, for making a fourth object 100 enter, for conveying the fourth object 100 inside the exit guide 5, and for making a fifth object 100 enter inside the rotatable device 411 will be repeated.

It will be clear to those skilled in the art that such a method can undergo numerous changes and variations. For example, after having inserted the second object 100 inside the exit guide 5, the rotatable device 411 can be made to rotate into its initial idle position and the process can be repeated in sequence.

Moreover, it is also clear that the rotatable device 411 can have a greater number of guides. It is also clear that the guides 30 and 31, instead of being formed from grooves inside the inner surface of the rotatable device 411, can be formed from any other shape capable of allowing the rotation of the object 100 inserted in them.

Although the present invention has been described with reference to the embodiments described above, it will be clear to those skilled in the art that it is possible to make different modifications, variations and improvements of the present invention in light of the teaching described above and covered by the attached claims without departing from the object and from the scope of protection of the invention. Moreover, the different embodiments described above can be combined with each other.

For example, although in the figures an entry guide 3 has been described having a lower height than the height of the objects 100, such an entry guide 3 can have a height greater than or equal to the objects 100. Moreover, it can have grooves adapted for receiving the projecting edge 103. With such a configuration it is thus possible to have an entry guide 3 with two inner walls having a distance smaller than the width of the projecting edge 103

Moreover, although entry guides have always been represented positioned horizontally, it is clear that such guides can also be inclined with any angle of inclination. Moreover, such guides can also not be rectilinear in the case in which there are conditions that make a non-rectilinear guide more advantageous.

Moreover, the rotatable device that has been described with one or two guides can also have four guides that make it possible to speed up the orientation process, so as to contain four objects simultaneously.

Moreover, the rotatable device having many parallel guides can be both configured so as to allow the rotation in phase of said guides through for example the use of a single motor, and to allow the out-of-phase rotation through for example the use of many motors. Moreover, by using many motors, it is also possible to rotate the different parallel guides with different rotation speeds.

Finally, anything that is considered known to those skilled in the art has not been described in order not to needlessly excessively complicate the invention described.

Consequently, the invention is not limited to the embodiments described above, but is only limited by the scope of protection of the attached claims.

## Claims

1. Machine for arranging objects (100) comprising a first end (101) and a projecting edge (103) arranged in proximity to said first end (101),
said machine comprising a rotatable device (4, 41, 411) equipped with at least one guide (7, 9, 30, 31), wherein said guide (7, 9, 30, 31) is configured so as to allow said objects (100) to be conveyed along said guide of said rotatable device (4, 41, 411) and wherein said guide (7, 9, 30, 31) comprises two grooves arranged on opposite walls of said guide (7, 9, 30, 31) and configured so as to be able to receive said projecting edge (103) of said objects (100) so as to prevent any possibility of said objects (100) arranged on said guide (7, 9, 30, 31) from coming out along a direction perpendicular to the direction of the guide (7, 9, 30, 31);
said rotatable device (4, 41,411) being configured so as to be able to rotate said objects (100) coming from at least one entry guide (3) with a first orientation with respect to said entry guide (3), so that said objects (100) are driven onto at least one exit guide (5) with an orientation with respect to said exit guide (5) that is equal or opposite to that which they had with respect to said entry guide (3).

2. Machine according to claim 1, **characterized in that** said guide (7, 9, 30, 31) of said rotatable device (4, 41, 411) is configured so as to receive said objects (100) arranged on a single row.

3. Machine according to one of claims 1 or 2, **characterized in that** said rotatable device (4, 41, 411) comprises at least one retaining system of said objects (8) configured so as to prevent said objects (100) from inadvertently coming out.

4. Machine according to one of claims 1 to 3, **characterized in that** said entry guide (3) is equipped with a system (6) for controlling the motion of said objects (100) to regulate the entry of said objects (100) in said rotatable device (4, 41, 411).

5. Machine according to one of claims 1 to 4, **characterized in that** said rotatable device (41) comprises a single guide configured so as to be able to contain at least one of said objects (100).

6. Machine according to one of claims 1 to 4, **characterized in that** said rotatable device (4, 411) comprises two guides arranged on the same plane, each of which is configured so as to be able to contain at least one of said objects (100).

7. Machine according to claim 6, **characterized in that** said guides of said rotatable device (4) are perpendicular to one another.

8. Machine according to one of claims 6 or 7, **characterized in that** a first guide (7) of said rotatable device (4) is a through guide and a second guide (9) of said rotatable device (4) is blind.

9. Machine according to one of claims 1 to 4, **characterized in that** said rotatable device (4, 41) comprises at least n parallel guides arranged on n different planes that are parallel to one another, wherein n is a natural number strictly greater than 1.

10. Machine according to one of claims 1 to 9, **characterized in that** said exit guide (5) comprises a plurality of exit guides configured so as to be able to be translated so as to house said objects (100) exiting from the rotatable device (4).

11. Machine according to one of claims 1 to 10, **characterized in that** said rotatable device (4, 41) is configured so as to rotate about an axis perpendicular with respect to a plane formed by the direction of said entry guide (3) and by the direction of said exit guide (5).

12. Machine according to one of claims 1 to 11, **characterized in that** said machine further comprises a second exit guide (11) positioned along the same direction as said entry guide (3) on an opposite side with respect to said rotatable device (4, 41).

13. Machine according to one of claims 1 to 10, **characterized in that** said rotatable device (411) is configured so as to rotate around an axis coinciding with the direction of said entry guide (3) and with the direction of said exit guide (5).

14. Machine according to claim 13, **characterized in that** said rotatable device (411) has an inner passage (411a) configured so as to be able to ensure the passage of said objects (100), wherein said inner passage (411a) of said rotatable device (411) comprises a plurality of grooves configured so as to form a first guide (30) and a second guide (31).

15. Machine according to claim 14, **characterized in that** said first guide (30) and said second guide (31) are offset by 180°.

16. Machine according to one of claims 13 to 15, **characterized in that** said rotatable device (411) is configured so as to be able to be rotated around its own axis through the rotation of a rotating shaft (451) parallel to the rotation axis of said rotatable device (411) and connected thereto through a transmission member.

## Patentansprüche

1. Maschine zum Anordnen von Gegenständen (100), die ein erstes Ende (101) und eine in der Nähe des ersten Endes (101) angeordnete vorstehende Kante (103) aufweisen,
wobei die Maschine eine drehbare Vorrichtung (4, 41, 411) umfasst, die mit wenigstens einer Führung (7, 9, 30, 31) versehen ist, wobei die Führung (7, 9, 30, 31) so eingerichtet ist, dass sie zulässt, dass die Gegenstände (100) an der Führung der drehbaren Vorrichtung (4, 41, 411) entlang befördert werden, und die Führung (7, 9, 30, 31) zwei Nuten umfasst, die an gegenüberliegenden Wänden der Führung (7, 9, 30, 31) angeordnet und so eingerichtet sind, dass sie den vorstehenden Rand (103) der Gegenstände (100) aufnehmen können, um jegliche Möglichkeit dahingehend zu verhindern, dass die an der Führung (7, 9, 30, 31) angeordneten Gegenstände (100) in einer Richtung senkrecht zu der Richtung der Führung (7, 9, 30, 31) austreten;
wobei die drehbare Vorrichtung (4, 41, 411) so konfiguriert ist, dass sie in der Lage ist, die Gegenstände (100), die von wenigstens einer Eintritts-Führung (3) mit einer ersten Ausrichtung in Bezug auf die Eintritts-Führung (3) kommen, so zu drehen, dass die Gegenstände (100) auf wenigstens eine Austritts-Führung (5) mit einer Ausrichtung in Bezug auf die Austritts-Führung (5) zu bewegt werden, die die gleiche ist wie diejenige, die sie in Bezug auf die Eintritts-Führung (3) hatten, oder entgegengesetzt zu dieser ist.

2. Maschine nach Anspruch 1, **dadurch gekennzeichnet, dass** die Führung (7, 9, 30, 31) der drehbaren Vorrichtung (4, 41, 411) so eingerichtet ist, dass sie die Gegenstände (100) in einer Reihe angeordnet aufnimmt.

3. Maschine nach einem der Ansprüche 1 oder 2, **dadurch gekennzeichnet, dass** die drehbare Vorrichtung (4, 41, 411) wenigstens ein Rückhaltesystem für die Gegenstände (8) umfasst, das so eingerichtet ist, dass es verhindert, dass die Gegenstände (100) unbeabsichtigt austreten.

4. Maschine nach einem der Ansprüche 1 bis 3, **dadurch gekennzeichnet, dass** die Eintritts-Führung (3) mit einem System (6) versehen ist, mit dem die Bewegung der Gegenstände (100) gesteuert wird, um den Eintritt der Gegenstände (100) in die drehbare Vorrichtung (4, 41, 411) zu regulieren.

5. Maschine nach einem der Ansprüche 1 bis 4, **dadurch gekennzeichnet, dass** die drehbare Vorrichtung (41) eine einzelne Führung umfasst, die so eingerichtet ist, dass sie wenigstens einen der Gegenstände (100) aufnehmen kann.

6. Maschine nach einem der Ansprüche 1 bis 4, **dadurch gekennzeichnet, dass** die drehbare Vorrichtung (4, 411) zwei in der gleichen Ebene angeordnete Führungen umfasst, von denen jede so eingerichtet ist, dass sie wenigstens einen der Gegenstände (100) aufnehmen kann.

7. Maschine nach Anspruch 6, **dadurch gekennzeichnet, dass** die Führungen der drehbaren Vorrichtung (4) senkrecht zueinander sind.

8. Maschine nach einem der Ansprüche 6 oder 7, **dadurch gekennzeichnet, dass** eine erste Führung (7) der drehbaren Vorrichtung (4) eine Durchgangsführung ist und eine zweite Führung (9) der drehbaren Vorrichtung (4) blind endet.

9. Maschine nach einem der Ansprüche 1 bis 4, **dadurch gekennzeichnet, dass** die drehbare Vorrichtung (4, 41) wenigstens n parallele Führungen umfasst, die in n verschiedenen Ebenen angeordnet sind, die parallel zueinander sind, wobei n eine natürliche Zahl ist, die in jedem Fall größer ist als 1.

10. Maschine nach einem der Ansprüche 1 bis 9, **dadurch gekennzeichnet, dass** die Austritts-Führung (5) eine Vielzahl von Austritts-Führungen umfasst, die so eingerichtet sind, dass sie verschoben werden können, um die aus der drehbaren Vorrichtung (4) austretenden Gegenstände (100) aufzunehmen.

11. Maschine nach einem der Ansprüche 1 bis 10, **dadurch gekennzeichnet, dass** die drehbare Vorrichtung (4, 41) so eingerichtet ist, dass sie sich um eine Achse dreht, die senkrecht in Bezug auf eine Ebene ist, die durch die Richtung der Eintritts-Führung (3) und durch die Richtung der Austritts-Führung (5) gebildet wird.

12. Maschine nach einem der Ansprüche 1 bis 11, **dadurch gekennzeichnet, dass** die Maschine des Weiteren eine zweite Austritts-Führung (11) umfasst, die in der gleichen Richtung wie die Eintritts-Führung (3) an einer in Bezug auf die drehbare Vorrichtung (4, 41) gegenüberliegenden Seite angeordnet ist.

13. Maschine nach einem der Ansprüche 1 bis 10, **dadurch gekennzeichnet, dass** die drehbare Vorrichtung (411) so eingerichtet ist, dass sie sich um eine Achse herum dreht, die mit der Richtung der Eintritts-Führung (3) und mit der Richtung der Austritts-Führung (5) zusammenfällt.

14. Maschine nach Anspruch 13, **dadurch gekennzeichnet, dass** die drehbare Vorrichtung (411) einen inneren Durchlass (411a) aufweist, der so eingerichtet ist, dass in der Lage ist, den Durchgang der Gegenstände (100) zu gewährleisten, wobei der innere Durchlass (411a) der drehbaren Vorrichtung (411) eine Vielzahl von Nuten umfasst, die so eingerichtet sind, dass sie eine erste Führung (30) und eine zweite Führung (31) bilden.

15. Maschine nach Anspruch 14, **dadurch gekennzeichnet, dass** die erste Führung (30) und die zweite Führung (31) um 180° versetzt sind.

16. Maschine nach einem der Ansprüche 13 bis 15, **dadurch gekennzeichnet, dass** die drehbare Vorrichtung (411) so eingerichtet ist, dass sie mittels der Drehung einer Drehwelle (451), die parallel zu der Drehachse der drehbaren Vorrichtung (411) und mit dieser über ein Übertragungselement verbunden ist, um ihre eigene Achse herum gedreht werden kann.

## Revendications

1. Machine d'agencement d'objets (100) comprenant une première extrémité (101) et un bord saillant (103) agencé à proximité de ladite première extrémité (101),
ladite machine comprenant un dispositif rotatif (4, 41, 411) équipé d'au moins un guide (7, 9, 30, 31), dans laquelle ledit guide (7, 9, 30, 31) est configuré de manière à permettre auxdits objets (100) d'être convoyés le long dudit guide dudit dispositif rotatif (4, 41, 411), et dans laquelle ledit guide (7, 9, 30, 31) comprend deux rainures agencées sur des parois opposées dudit guide (7, 9, 30, 31) et configurées de manière à pouvoir recevoir ledit bord saillant (103) desdits objets (100) de manière à éviter toute possibilité que lesdits objets (100) agencés sur ledit guide (7, 9, 30, 31) ne ressortent dans une direction perpendiculaire à la direction du guide (7, 9, 30, 31) ;
ledit dispositif rotatif (4, 41, 411) étant configuré de manière à pouvoir faire tourner lesdits objets (100) provenant d'au moins un guide d'entrée (3) avec une première orientation par rapport audit guide d'entrée (3), de telle sorte que lesdits objets (100) sont amenés sur au moins un guide de sortie (5) avec une orientation par rapport audit guide de sortie (5) qui est égale ou opposée à celle qu'ils avaient par rapport audit guide d'entrée (3) .

2. Machine selon la revendication 1, **caractérisée en ce que** ledit guide (7, 9, 30, 31) dudit dispositif rotatif (4, 41, 411) est configuré de manière à recevoir lesdits objets (100) agencés en une seule file.

3. Machine selon l'une des revendications 1 et 2, **caractérisée en ce que** ledit dispositif rotatif (4, 41, 411) comprend au moins un système de retenue desdits objets (8) configuré de manière à éviter que lesdits objets (100) ne ressortent accidentellement.

4. Machine selon l'une des revendications 1 à 3, **caractérisée en ce que** ledit guide d'entrée (3) est équipé d'un système (6) pour contrôler le déplacement desdits objets (100) de manière à réguler l'entrée desdits objets (100) dans ledit dispositif rotatif (4, 41, 411).

5. Machine selon l'une des revendications 1 à 4, **caractérisée en ce que** ledit dispositif rotatif (41) comprend un guide unique configuré de manière à pouvoir contenir au moins l'un desdits objets (100).

6. Machine selon l'une des revendications 1 à 4, **caractérisée en ce que** ledit dispositif rotatif (4, 411) comprend deux guides agencés dans le même plan, configurés chacun de manière à pouvoir contenir au moins l'un desdits objets (100).

7. Machine selon la revendication 6, **caractérisée en ce que** lesdits guides dudit dispositif rotatif (4) sont perpendiculaires entre eux.

8. Machine selon l'une des revendications 6 et 7, **caractérisée en ce qu'**un premier guide (7) dudit dispositif rotatif (4) est un guide traversant et **en ce qu'**un deuxième guide (9) dudit dispositif rotatif (4) est borgne.

9. Machine selon l'une des revendications 1 à 4, **caractérisée en ce que** ledit dispositif rotatif (4, 41) comprend au moins n guides parallèles agencés sur n plans différents qui sont parallèles entre eux, dans laquelle n est un nombre naturel strictement supérieur à 1.

10. Machine selon l'une des revendications 1 à 9, **caractérisée en ce que** ledit guide de sortie (5) comprend une pluralité de guides de sortie configurés de manière à pouvoir être transférés pour loger lesdits objets (100) qui sortent dudit dispositif rotatif (4).

11. Machine selon l'une des revendications 1 à 10, **caractérisée en ce que** ledit dispositif rotatif (4, 41) est configuré de manière à tourner autour d'un axe perpendiculaire à un plan formé par la direction dudit guide d'entrée (3) et la direction dudit guide de sortie (5) .

12. Machine selon l'une des revendications 1 à 11, **caractérisée en ce que** ladite machine comprend en outre un deuxième guide de sortie (11) positionné dans la même direction que ledit guide d'entrée (3) sur un côté opposé audit dispositif rotatif (4, 41).

13. Machine selon l'une des revendications 1 à 10, **caractérisée en ce que** ledit dispositif rotatif (411) est configuré de manière à tourner autour d'un axe qui coïncide avec la direction dudit guide d'entrée (3) et avec la direction dudit guide de sortie (5).

14. Machine selon la revendication 13, **caractérisée en ce que** ledit dispositif rotatif (411) comporte un passage interne (411a) configuré de manière à pouvoir assurer le passage desdits objets (100), dans laquelle ledit passage interne (411a) dudit dispositif rotatif (411) comprend une pluralité de rainures configurées de manière à former un premier guide (30) et un deuxième guide (31).

15. Machine selon la revendication 14, **caractérisée en ce que** ledit premier guide (30) et ledit deuxième guide (31) sont décalés de 180°.

16. Machine selon l'une des revendications 13 à 15, **caractérisée en ce que** ledit dispositif rotatif (411) est configuré de manière à pouvoir tourner autour de son propre axe par rotation d'un arbre de rotation (451) parallèle à l'axe de rotation dudit dispositif rotatif (411) et connecté à celui-ci par un élément de transmission.
